# EUROPEAN PATENT APPLICATION

(11) **EP 4 144 594 A1**
(43) Date of publication of application: **08.03.2023**
(21) Application number: 21210206.5
(22) Date of filing: 24.11.2021
(51) Int. Cl.: B60R 19/24, B60R 19/34

(54) **CRASH BRACKET AND BUMPER BEAM COMPRISING SUCH CRASH BRACKET**

(30) Priority: 03.09.2021 SE 2151103
(71) Applicant: AUTOTECH ENGINEERING S.L., 48340 Amorebieta-Etxano, Bizkaia (ES)
(72) Inventor: NILSSON, Johan, 975 93 Luleå (SE)
(74) Representative: Ehrner & Delmar Patentbyrå AB

(57) **Abstract**

The invention relates to crash bracket (10) for attaching a bumper beam (2) to a side beam (20) The bracket comprises a first attachment flange (11) and a second attachment flange (12) for attachment to upper and lower sides (21,22) of the side beam (20), respectively, a support portion (13) configured to align with and attach to a web (3) of the bumper beam (2), the support portion (13) having a proximal side (13A) configured to be arranged facing a centre portion (2A) of the bumper beam (2) and a distal side (13B) configured to be arranged facing an end portion (2B) of the bumper beam (2), opposite to the proximal side (13A), and first and second leg portions (14,15) that connect the support portion (13) to the respective first and second flanges (11,12), wherein the first and second leg portions (14,15) at least partly extend orthogonally with respect to the first and second flanges (11,12) and the support portion (13). A notch (17,17') is provided at the proximal portion (14A,15A) of the leg portions (14,15) to provide deformation guides for the leg portions (14,15).

## Description

### TECHNICAL FIELD

The invention relates to a crash bracket for attachment to a bumper beam. Further, the invention relates to a bumper beam to which such a crash bracket is attached.

### BACKGROUND

In the automotive industry, weight and structural strength are important features for most components, especially components of the body in white. Further, these features tend to counteract each other, such that often a compromise need to be found between weight and structural strength.

One component that stands out as being very important in the design of a body in white for providing a collision secure construction is the bumper beam. The bumper beam is the part of the vehicle that takes the first hit and should therefore be arranged to withstand collisions of different types and at different locations of the bumper beam Specifically, the bumper beam should be designed to cope with collisions at different locations of the bumper beam, and to transmit impact forces to attachment points of the bumper beam, where the bumper beam is typically attached to side beams of the body in white, regardless of the primary impact point on the cross beam.

In a collision with a sole impact point located between the attachment points, it is a challenge to convey the forces to the attachment points without allowing the bumper beam to collapse. A problem that may occur in a such a collision is the bumper beam is bent at the impact point or at a point close to the attachment points to the side beams.

Conventionally, the bumper beam is attached to the side beams via brackets, which may be referred to as crash brackets or via crash boxes. Typically, crash brackets are used when space is limited and when the structure of the bumper beam is such that it allows the omission of a crash box. A crash box is normally configured to absorb more collision forces than what is possible for a crash bracket.

A problem that may occur when crash brackets are used is that their somewhat limited ability to absorb collision forces in comparison to a crash box may result in that the bumper beam will deform in an unwanted manner, for example with a heavy bending in a point close to the crash box.

It would be advantageous to find a way of achieving a beneficial deformation of a bumper beam-crash bracket arrangement without unduly increasing the weight or complexity of the bumper beam and to limit problems of prior art arrangements involving crash brackets.

### SUMMARY OF THE INVENTION

It is an object of the invention to provide a crash bracket for a bumper beam that exploits the structural strength of the bumper beam in favourable manner without unduly increasing the weight or complexity of the bumper beam, or the crash bracket.

This object is achieved by the invention according to a first and a second aspect.

According to a first aspect the invention relates to a crash bracket for attaching a bumper beam to a side beam of a vehicle chassis, wherein the side beam extends in a first direction corresponding to the length and intended travel direction of a vehicle comprising the vehicle chassis, and wherein the bumper beam is configured to extend in a second direction, which is horizontal and substantially orthogonal to the first direction, the bracket comprising:
- a first attachment flange and a second attachment flange for attachment to upper and lower flanges of the side beam, respectively,
- a support portion configured to align with and attach to a web of the bumper beam, the support portion having a proximal side configured to be arranged facing a centre portion of the bumper beam and a distal side configured to be arranged facing an end portion of the bumper beam, opposite to the proximal side in the second direction, and
- first and second leg portions that connect the support portion to the respective first and second flanges, the first and second leg portions at least partly extending in the first direction, the first and second leg portions comprising proximal portions configured to be arranged facing the centre portion of the bumper beam,
wherein a notch is provided in the proximal portion of at least on leg portion to provide a deformation guide for the leg portions.

In embodiments of the invention a notch is provided in the proximal portion of both leg portions to provide a symmetric deformation guide for both leg portions of the crash bracket.

According to a second aspect the invention relates to bumper beam wherein a crash bracket as described above is attached to the bumper beam. Preferably, the crash bracket is attached to the bumper beam by welding.

An advantage of the invention according to the first and the second aspect is that design of the crash bracket will provide a controlled deformation with beneficial deformation in a front or rear side collision involving the bumper beam which is attached by means of the crash bracket.

Other embodiments and advantages will be apparent from the detailed description and the appended drawings.

### BRIEF DESCRIPTION OF THE DRAWINGS

Below, specific embodiments of the invention will be described with reference to the appended drawings, of which:
- **Fig. 1**: is a perspective view of a bumper beam with two crash brackets,
- **Fig. 2**: is a top view of a bumper beam with two crash brackets,
- **Fig. 3**: is a perspective view of a crash bracket arranged on a bumper beam,
- **Fig. 4**: is a perspective view of a bumper beam attached to a side beam via a crash bracket,
- **Fig. 5A**: is a top view of a bumper beam attached to a side beam via a crash bracket,
- **Fig. 5B**: is a top view of a crash bracket,
- **Fig. 6A**: is a sectional view of a bumper beam attached to a side beam via a crash bracket taken along the line A-A in Fig. 5,
- **Fig. 6B**: is a sectional view of a bumper beam attached to a side beam via a crash bracket taken along the line B-B in Fig. 5,
- **Fig. 7**: is a perspective view of a crash bracket according to a second embodiment arranged on a bumper beam,
- **Fig. 8**: is a top view of a bumper beam attached to a side beam via a crash bracket according to a second embodiment,
- **Fig. 9A**: is a sectional view of a bumper beam attached to a side beam via a crash bracket taken along the line A-A in Fig. 8, and
- **Fig. 9B**: is a sectional view of a bumper beam attached to a side beam via a crash bracket taken along the line B-B in Fig. 8.

### DETAILED DESCRIPTION OF THE SHOWN EMBODIMENTS

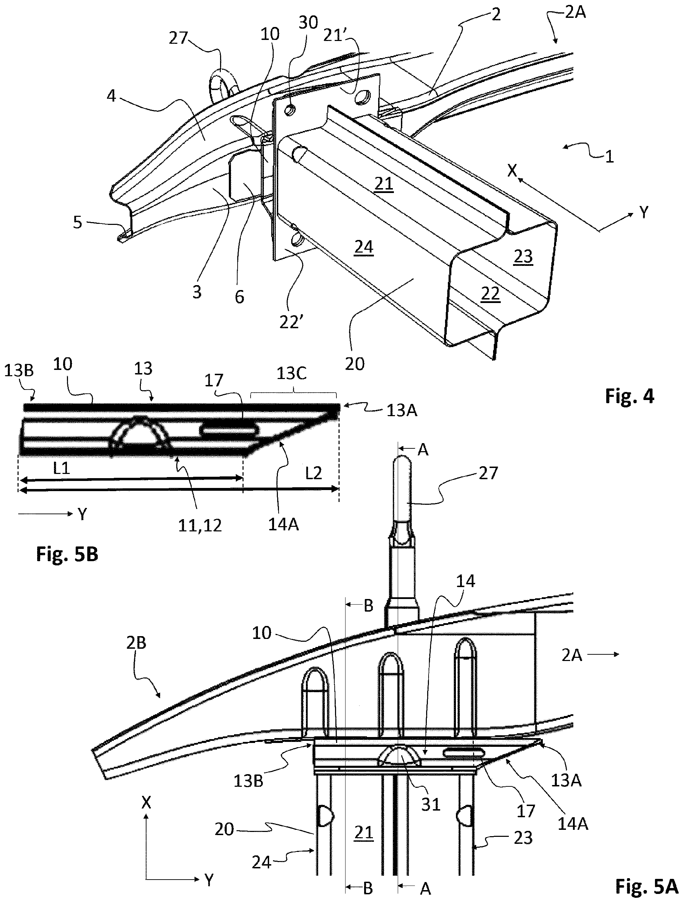

Fig. 4 is a perspective view of a bumper beam 2 for a vehicle, the bumper beam 2 having a hat shaped profile comprised of a web 3 and two legs, an upper leg 4 and a lower leg 5, extending in a first direction X corresponding to the length and intended travel direction of a vehicle comprising the bumper beam 2.

Crash brackets 10 for attaching the bumper beam 2 to side beams 20 of a vehicle chassis 1 are provided. In Fig. 4 only relevant parts of the vehicle chassis 1 are shown, including a part of one side beam 20 and one bumper beam 2. Preferably, a bumper beam is arranged at both the front and the rear of the vehicle and side beams 20 are preferably arranged at both sides and may be arranged all along the sides of the vehicle chassis 1 between the bumper beams 2.

The side beam 20 shown in Fig. 4 extends in a first direction X corresponding to the length and intended travel direction of a vehicle comprising the vehicle chassis 1, wherein the bumper beam 2 extends in a second direction Y, which is horizontal and substantially orthogonal to the first direction X, i.e. extending from side to side with respect to the vehicle chassis 1. In this context the term substantially orthogonal indicates that the angle between the first direction X and the second direction Y is between 80° and 100°.

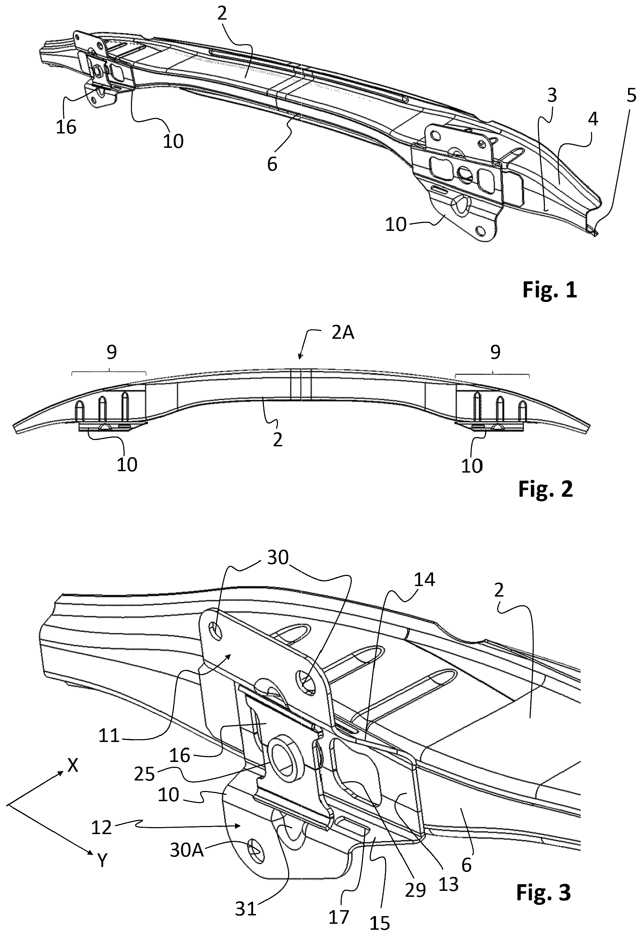

Fig. 1 is a perspective view of a bumper beam 2 on which two crash brackets 10 are arranged. Specifically, this is a rear bumper beam 2 configured to be arranged at the rear portion of a vehicle adapted for right hand traffic. The crash bracket 10 is well adapted for use on a rear bumper beam. In the shown embodiment the shape of the crash brackets 10 are inversed such that the left bracket is reversed from the right bracket. Other than that, the two brackets are identical in shape. Further though, in the shown embodiment the right crash bracket 10, which is on the left side in the drawing, is provided with a tow bracket 16 for holding a tow tube 25. (See Fig. 3). It should be noted that the crash bracket 10 according to the invention may very well be produced in a symmetric manner such that the left and right crash brackets would be identical and exchangeable.

In the shown embodiment, a longitudinal patch 6 is arranged along the web 3 of the bumper beam 2, which patch 6 preferably extends over the central portion 2A and over both attachment portion 9 of the bumper beam 2, at which the crash brackets 10 are attached to the bumper beam 2. (See Fig. 2)

As is visible in the detailed perspective view in Fig. 3 the crash bracket 10 comprises weld openings 29 configured to allow the crash bracket 10 to be welded to the bumper beam 2, and preferably to the patch 6, if such a patch is provided on the web 3 of the bumper beam 2. The weld openings 29 are provided in a support portion 13 of the crash bracket configured to align with and attach to the web 3 of the bumper beam 2.

The bracket 10 further comprises a first attachment flange 11 and a second attachment flange 12. A first leg portion 14 and a second leg portion 15 are arranged to connect the support portion 13 to the respective first and second flanges 11,12. Both the first and second leg portions 14,15 extend at least partly in the first direction X. Thereby, the first and second leg portions 14,15 are configured to yield in collision where the bumper beam 2 is pushed inwards towards the vehicle.

As may be deduced from Fig. 4, although not visible per se the first attachment flange 11 and the second attachment flange 12 are configured for attachment to upper and lower flanges 21',22' of the side beam 20, respectively. The upper and lower flanges 21',22' extend from upper and lower sides 21,22 of the side beam 20 and are illustrated in Fig. 4. Screw holes 30 are arranged in the upper and lower flanges 21',22' to match screw holes provided in the first and second flanges 11,12 of the crash bracket 10.

As is illustrated in Fig 5A, the support portion 13 has a proximal portion 13A configured to be arranged facing a centre portion 2A of the bumper beam 2 and a distal side 13B configured to be arranged facing an end portion 2B of the bumper beam 2, opposite to the proximal side 13A in the second direction Y. Also, the leg portions 14,15 comprises proximal portions 14A,15A, respectively, configured to be arranged facing the centre portion 2A of the bumper beam 2.

Also visible in Fig 5A is a notch 17 provided at the proximal portion 14A, 15A of the leg portions 14,15. The notch 17 is arranged to provide a deformation guide for the leg portions 14,15. The notch 17 is configured to guide the deformation such that the deformation will initiate in the proximal portion 14A,15A of the leg portions. This is beneficial as it will allow the bumper beam 2 to bend inwards in its mid portion without risking that it will break at the interaction with the proximal side 23 of the side beam 20. Namely, the controlled deformation of the crash bracket 10 which is initiated at its proximal (inner) side 13a of the support portion 13 and projects outwards towards the distal side 13B of the support portion 13.

As is illustrated in Fig. 5B, the first and the second attachment flanges 11,12 extend in the second direction Y along a first length L1 corresponding to a length of the upper and lower sides 21,22 of the side beam 20 as is illustrated in Fig. 5A. The support portion 13 extends along a second length L2 in the second direction Y, which is longer than the first length L1. The additional length of the support portion 13 is comprised of an extended portion 13C at its proximal side 13A extending towards the centre portion 2A of the bumper beam 2 beyond the extension of the attachment flanges 11,12 in the same direction Y. The length of the extended portion 13C is preferably at least 20 mm, and more preferably at least 40 mm. Further, the length of the extended portion 13C is preferably less than 100 mm, and more preferably less than 80 mm.

Preferably, the leg portions 14,15, of which only the first leg portion 14 is visible in Figs 5A and 5B, have inclined proximal portions 14A, 15A, respectively, joining the extended portion 13C of the support portion 13 to the first and second attachment flanges 11,12, respectively. The notch 17 is advantageously provided at least partly in said inclined proximal portions 14A, 15A.

In the embodiment shown in Figs. 2-5, the notch 17 is comprised of a closed recess arranged at least partly in the inclined proximal portions 14A,15A, of the leg portions 14,15. The notch may be comprised of a recess or a cut out, for example an oval cut out extending in the second direction Y.

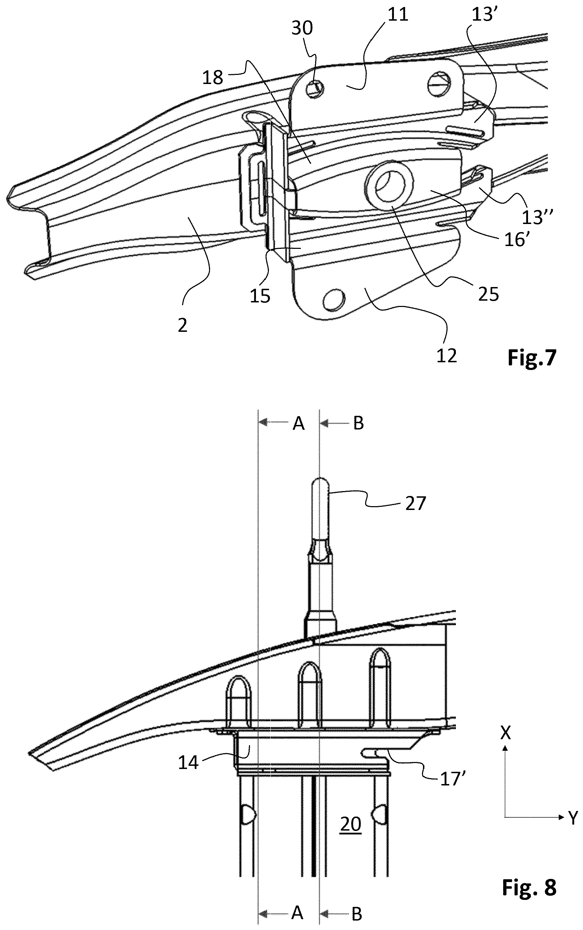

In alternative embodiments, shown in Fig. 8, the notch 17' is instead comprised of an open recess or cut out, which is open towards the proximal side of the leg portions 14,15.

In conceivable embodiments, and as illustrated in Fig. 5A, the side beam 20 has a substantially rectangular cross section with vertically opposed upper and lower sides 21,22, and laterally opposed proximal and distal sides 23,24. The first and the second attachment flanges 11,12 of the crash bracket are configured to extend along the upper and lower sides 21,22, respectively, and the extended portion 13C extends beyond the extension of the proximal side 23 of the side beam 20 in the second direction Y towards the centre portion 2A of the bumper beam 2.

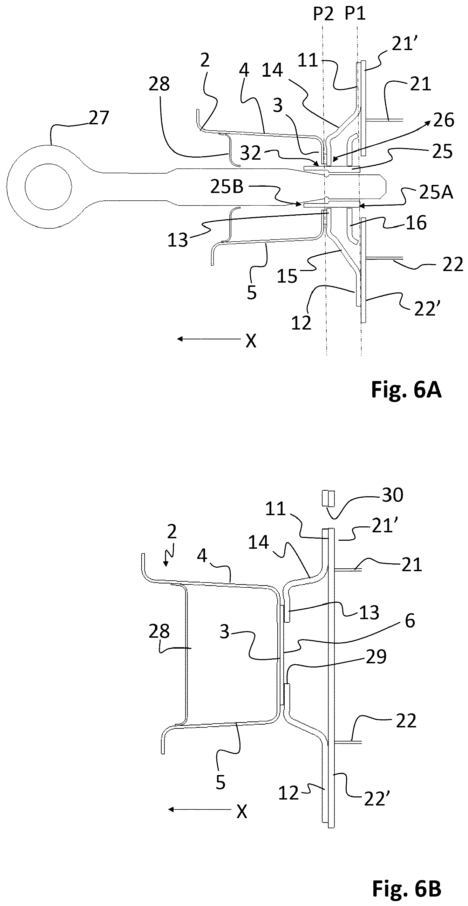

As is illustrated in Fig 6A the first and the second attachment flanges 11,12 extend in a common first plane P1, and the support portion 13 extends in a second plane P2, which is parallel or close to parallel to the first plane P1 but separated therefrom by the extension of the leg portions 14,15 in the first direction X, both planes P1, P2 extending orthogonally, or close to orthogonally, with respect to the second direction Y. In this context the term close to orthogonally indicates that the angle between the planes P1, P2 and the second direction Y is between 80° and 100°. Likewise, the term close to parallel indicates that the angle between the planes P1 and P2 is from 0° to 10°.

As is illustrated in e.g. Figs. 3 and 6A the crash bracket 10 is configured to include a tow bracket 16 for supporting a first end 25A of a tow tube 25. The tow bracket 16 may be arranged between the first and the second attachment flange 11,12, in the space between the leg portions 14 and 15. In the embodiment shown in Figs. 3 and 6A the tow bracket 16 is a separate part, which is welded to the first and the second attachment flanges 11,12 and/or to the leg portions 14,15. The support portion 13 includes a through hole 26 which is preferably configured to support a second end 25B of the tow tube 25. Also, a through hole 32 is arranged through the web 3 of the bumper beam 2 through which the second end 25B of the tow tube 25 extends.

When needed, e.g. during towing, a tow hook 27 may be screwed into the tow tube 25. The tow hook 27 is normally stored in a space inside the trunk of the vehicle during normal operation of the vehicle. A cover plate 28 is preferably arranged at exterior side of the bumper beam 2 to cover the opening between the upper and lower legs 4 and 5 of the bumper beam 2. An opening is provided in the cover plate 28 to allow access for the tow hook when needed.

As is visible in Fig. 3 and 5A the crash bracket 10 includes a bulge 31 at the lateral centre of the transition between the support portion 13 and the first and second leg portions 14 and 15. The line A-A in Fig. 5A passes through this bulge 31 and consequently in the corresponding view along the line A-A shown in Fig. 6A the leg portions 14,15 are represented by this bulge. In the view shown in Fig. 6B taken along the line B-B in Fig. 5A the support portion 13 is interrupted by a weld opening 29 provided to facilitate welding of the crash bracket 10 to the web 3 of the bumper beam 2, or a patch 6, if such is provided.

Also visible in Fig. 6B are screw holes 30 provided through the first attachment flange and the upper end of the side beam 20 to allow the crash bracket 10 to be screwed to the side beam 20.

In Figs. 7-9B, an alternative embodiment of a crash bracket 10 is shown, in which the tow bracket 16' is an integrated part of the crash bracket 10. The tow bracket 16' includes an opening to support the tow tube 25, inside which a tow hook may be fastened by screwing.

As is illustrated in Fig. 8, the notch 17' in the leg portions 14 may be comprised of an open recess, which is open towards the proximal side of the leg portions 14,15. The formation of the notch is not bound to any of the shown different embodiments and the invention covers all feasible combinations of features described in this specification, as well as all embodiment not described but included in the scope of the following claims.

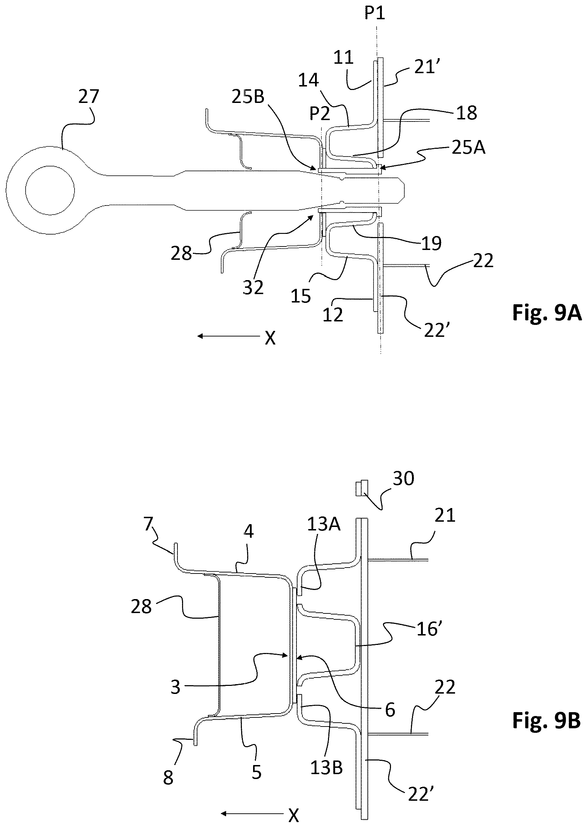

Fig. 9A is a sectional view of a bumper beam 2 attached to a side beam 20 via a crash bracket 10 taken along the line A-A in Fig. 8, and Fig. 9B is a sectional view taken along the line B-B in Fig. 8.

In this embodiment the support portion of the crash bracket 10 is comprised of a first and a second support portion 13A,13B, which are linked to the tow bracket 16' via intermediate leg portions 18,19, which at least partly extend along the first direction X.

The crash bracket 10 is advantageously used with vehicle chassis that does not include a crash box, and preferably with a bumper beam on which a patch 6 is arranged along the web 3 of the bumper beam 2. The first and the second support portions 13A,13B of the crash bracket 10 are preferably welded to the patch 6 along the second plane P2.

The tow bracket 16', in the form of an integrated part of the crash bracket 10, provides a support for the interaction between the crash bracket 10 and the side beam along the first plane P1, in addition to the contact between the first and the second attachment flanges 11,12 of the crash bracket 10 and the upper and lower flanges 21',22', respectively, of the side beam 20.

In this embodiment the first end 25A of the tow tube 25 is supported by the integrated tow bracket 16' and the second end 25B of the tow tube 25 is supported by the through hole 32 through the web 3 of the bumper beam 2, and/or by the patch 6.

Above the invention has been described with reference to specific embodiments. The invention is however not limited to these embodiments. It is obvious to a person skilled in the art that other embodiments are possible within the scope of the following claims.

## Claims

1. A crash bracket (10) for attaching a bumper beam (2) to a side beam (20) of a vehicle chassis (1), wherein the side beam (20) extends in a first direction (X) corresponding to the length and intended travel direction of a vehicle comprising the vehicle chassis (1), and wherein the bumper beam (2) is configured to extend in a second direction (Y), which is substantially orthogonal to the first direction (X), the bracket comprising:
- a first attachment flange (11) and a second attachment flange (12) for attachment to upper and lower flanges (21',22') of the side beam (20), respectively,
- a support portion (13) configured to align with and attach to a web (3) of the bumper beam (2), the support portion (13) having a proximal side (13A) configured to be arranged facing a centre portion (2A) of the bumper beam (2) and a distal side (13B) configured to be arranged facing an end portion (2B) of the bumper beam (2), opposite to the proximal side (13A) in the second direction (Y), and
- first and second leg portions (14,15) that connect the support portion (13) to the respective first and second flanges (11,12), the first and second leg portions (14,15) having at least a partial extension in the first direction (X), the first and second leg portions (14,15) comprising proximal portions (14A,15A) configured to be arranged facing the centre portion (2A) of the bumper beam (2),
**characterised in that** a notch (17,17') is provided in the proximal portion (14A,15A) of at least one leg portion (14,15) to provide a deformation guide for said leg portion (14,15).

2. The crash bracket (10) according to claim 1, wherein the first and the second attachment flanges (11,12) extend in the second direction (Y) along a first length (L1) configured to correspond to a lateral extension of the upper and lower flanges (21',22') of the side beam (20), wherein the support portion (13) extends along a second length (L2) in the second direction (Y), which is longer than the first length (L1), the support portion (13) including an extended portion (13C) at its proximal side (13A) extending towards the centre portion (2A) of the bumper beam (2) beyond the extension of the attachment flanges (11,12) in the second direction (Y).

3. The crash bracket (10) according to claim 2, wherein the leg portions (14,15) have inclined proximal portions (14A,15A), respectively, joining the extended portion (13C) of the support portion (13) to the first and second attachment flanges (11,12), respectively, the notch (17,17') being provided at least partly in said inclined proximal portion (14A,15A).

4. The crash bracket (10) according to any one of the preceding claims, wherein the notch (17') comprises an open recess, which is open towards the proximal side of the leg portions (14,15).

5. The crash bracket (10) according to any one of the claims 1-3, wherein the notch (17) comprises a closed recess or opening arranged at least partly in the inclined proximal portions (14A,15A), of the leg portions (14,15).

6. The crash bracket (10) according to any one of the claims 2-5, wherein the extended portion (13C) extends at least 2 cm beyond the extension of the attachment flanges (11,12) in the second direction (Y) towards the centre portion (2A) of the bumper beam (2).

7. The crash bracket (10) according to any one of the claims 2-6, wherein the side beam (20) has a substantially rectangular cross section with vertically opposed upper and lower sides (21,22), and laterally opposed proximal and distal sides (23,24), wherein the first and the second attachment flanges (11,12) of the crash bracket are configured to extend along the upper and lower flanges (21',22'), respectively, and wherein the extended portion (13C) extends beyond the extension of the proximal side (23) of the side beam (20) in the second direction (Y) towards the centre portion (2A) of the bumper beam (2).

8. The crash bracket (10) according to any one of the preceding claims, wherein the first and the second attachment flanges (11,12) extend in a common first plane (P1), and wherein the support portion (13) extends in a second plane (P2), which is parallel or close to parallel to the first plane (P1) but separated therefrom by the extension of the leg portions (14,15) in the first direction (X), both planes (P1,P2) extending orthogonally, or close to orthogonally with respect to the second direction (Y).

9. The crash bracket (10) according to any one of the preceding claims, wherein the crash bracket (10) includes a tow bracket (16,16') for supporting a first end (25A) of a tow tube (25), which tow bracket (16,16') is arranged between the first and the second attachment flange (11,12).

10. The crash bracket (10) according to claim 9, wherein the tow bracket (16) is a separate part, which is welded to the first and the second attachment flanges (11,12) or to the leg portions (14,15).

11. The crash bracket (10) according to claim 10, wherein the support portion (13) includes a through hole (26) configured to support a second end (25B) of the tow tube (25).

12. The crash bracket (10) according to claim 9, wherein the tow bracket (16') is an integrated part of the crash bracket (10).

13. The crash bracket (10) according to claim 12, wherein the support portion of the crash bracket (10) is comprised of a first and a second support portion (13A,13B), which are linked to the tow bracket (16') via intermediate leg portions (18,19), which have at least a partial extension in the first direction (X).

14. A bumper beam (2) **characterised in that** a crash bracket (10) according to any one of the preceding claims is attached to the bumper beam.

15. The bumper beam (2) according to claim 14, wherein a patch (6) is arranged along a web (3) of the bumper beam (2), and wherein the support portion (13) of the crash bracket (10) is welded to the patch (6).
